# EUROPEAN PATENT SPECIFICATION

(11) **EP 1 330 929 B1**
(45) Date of publication and mention of the grant of the patent: **01.02.2006**
(21) Application number: 01988511.0
(22) Date of filing: 17.10.2001
(51) Int. Cl.: H04Q 7/28

(54) **COMMUNICATION UNIT THAT COMMUNICATES EITHER DIRECTLY OR VIA AN INTERMEDIATE NODE AND CORRESPONDING METHOD**
FUNKGERÄT DAS ENTWEDER DIREKT ODER MITTELS EINES ZWISCHENKNOTENS KOMMUNIZIERT UND ENTSPRECHENDES VERFAHREN
UNITE DE COMMUNICATION COMMUNICANT DIRECTEMENT OU VIA UN NOEUD INTERMEDIARE ET PROCEDE CORRESPONDANT

(30) Priority: 23.10.2000 GB 0025918
(43) Date of publication of application: 30.07.2003
(73) Proprietor: MOTOROLA ISRAEL LIMITED, Tel Aviv 67899 (IL); Motorola Limited, Basingstoke, Hampshire RG22 4PD (GB)
(72) Inventor: SHAHAF, Mark, 77462 Israel. (IL); CARMON, Rafael, Holon,58679 Israel (IL); METZER, Nir, 77432 Israel (IL)
(74) Representative: McCormack, Derek James
(86) International application number: PCT/EP2001/012046
(87) International publication number: WO 2002/035867

(56) References cited:
- EP-A- 1 168 676
- GB-A- 2 316 271
- PATENT ABSTRACTS OF JAPAN vol. 1995, no. 04, 31 May 1995 (1995-05-31) -& JP 07 023464 A (MITSUBISHI ELECTRIC CORP), 24 January 1995 (1995-01-24)

## Description

### Field of the Invention

This invention relates to a radio communication system, a communication unit and a method of communication. In particular it relates to the selection of a communication resource in a mobile communication system. The invention is applicable to, but not limited to, a subscriber unit operable to provide a radio communication link between itself and a second subscriber unit. The method is operable to establish a call set-up.

### Background of the Invention

Systems for radio communication between subscribers are distinguished over fixed communication systems, such as the public switched telephone networks (PSTN), principally in that subscriber communications units may move between communication service areas and providers and in doing so encounter varying radio propagation environments. Therefore the quality of a communication link to/from a subscriber unit varies as the subscriber unit changes its location.

The subscriber units are typically either vehicular-mounted 'mobile' or 'hand-portable' radio or cellular units. Henceforth, the term mobile station (MS) will be used to embrace all such subscriber communication units.

Wireless communication systems, for example cellular telephony or private mobile radio communication systems, typically provide for radio telecommunication links to be arranged between a plurality of subscriber units. There are typically two methods of communicating between MSs. A first mode is a direct communication between two MSs. A second mode uses an intermediary station to forward the communication. The intermediary station may comprise a base transceiver station (BTS) connected to the communication system infrastructure. A BTS is generally considered an "intelligent" terminal, as it has the processing and control capability to influence a substantial amount of the communication traffic passing through it.

A further intermediary station is a radio repeater station, which performs a minimal amount of processing in receiving a communication from a first MS and re-transmitting the received communication to at least one second MS. As a repeater station has little control over the communication passing through it, it is often termed a "dummy" terminal.

The communication link from a BTS or a repeater to a MS is generally referred to as a down-link communication channel. Conversely, the communication link from a MS to a BTS or a Repeater is generally referred to as an up-link communication channel.

Multiple access techniques permit simultaneous communication links to be set-up to/from several MSs over a plurality of communications channels. In some cases, one or more channels are used for carrying traffic (e.g. information such as speech sent from user to user) whilst one or more other channels (which may be logical or dedicated channels) are used for transferring system control information. Examples of multiple access techniques include: frequency division multiple access (FDMA), time division multiplexing/ multiple access (TDM, TDMA) and code division multiple access (CDMA).

In a wireless private mobile radio (PMR) communication system, it is known, as noted earlier, that a MS may be able to communicate in a direct communication link with at least one other MS, especially where one or both of the MSs are outside a dedicated network coverage area. Such a communication mode is generally referred to as Direct Mode Operation (DMO). This term is in contrast to Trunked Mode Operation (TMO) that enables the MS to work within a network coverage, with communications routed via one or more base transceivers. When a MS operates in DMO, communications do not pass through any base transceiver or other fixed 'intelligent' system hardware and there is no system controller and therefore no centralised timing synchronisation or power control to help minimise interference between channels.

DMO is similar in principle to the back-to-back operation of conventional half-duplex radio schemes used by many existing private mobile radio (PMR) systems such as that of the emergency services. DMO communications are limited in range due to limitations placed on the MS, such as maximum transmit power or channel conditions.

When operating in DMO, MSs communicate over dedicated frequencies. A MS operating in DMO may select a dedicated frequency or the MS may scan the available dedicated frequencies to find an available frequency based on signal strength measurements. In some DMO environments there may be a pool of communication channels available.

The selection of a particular frequency by a MS especially when operating in DMO is generally dependent upon whether the measured signal strength exceeds a fixed, acceptable-communication threshold. Used methods of selecting and scanning frequencies are inefficient when there are a large numbers of users in a DMO system, owing to the unstructured nature and consequential high level of interference associated with such DMO communications.

Furthermore, the received signal level can vary sporadically owing to the changing propagation conditions. In addition, interference is dependent upon the number of users and the number of users varies from time to time on a system.

In radio communication systems operating without a fixed network control, such as DMO, communication repeaters have been used in the prior art to extend the communication range of MS to MS communications. For instance, a first MS may transmit to a repeater for re-transmission, after minimal decoding and error correction processing, to a second MS.

Such a communication is particularly advantageous if the second MS would have been out of transmitting range of the first MS without the use of the repeater. A direct mode repeater thus provides a service for direct mode radios wishing to communicate over an enlarged direct mode coverage area. Direct mode repeaters may operate using either a single frequency or two or more frequencies.

There is no known mechanism in place for MSs operating in DMO to optimise the use of the direct mode resources. As a consequence, there are no signalling schemes available for a direct mode repeater to form any type of a broadcast signal during periods of channel inactivity and/or during periods of communications. Lack of available signalling information is likely to result in some calls being jammed or never even set up. In many uses, such as in police or public safety communications, such an unreliable communication link is unacceptable.

A known procedure for operation via a DMO repeater has been defined by the European Telecommunication Standards Institute (ETSI) in the TErrestrial Trunked RAdio (TETRA) standard in ETS-300-396-4.

According to the TETRA DMO standard, all MSs working through a DMO repeater station will monitor down-link transmissions from the repeater in order to receive calls via the repeater. The down-link transmission is basically a repeated and delayed version of the corresponding up-link transmission to the repeater.

In known DMO procedures a calling MS is instructed, either by pre-programmed information or by detection of the repeater's presence signal, to address the repeater when attempting to set-up a call and subsequently transmit to a Talk Group or other individual MS. Called MSs know, either by pre-programming or by detection of the repeater's presence signal, to monitor only the downlink repeater link searching for their own individual or group address. Once they have received a re-transmission signal from the repeater, specifying their individual or group address, they can decide whether or not to join the individual or group-call.

However, the inventors of the present invention have recognised that such a call set-up mechanism is inefficient in certain operational scenarios. First, let us assume that a first MS is attempting to set up a group-call, via a repeater, with a second and third MS. The second MS is within range of the repeater, but the third MS is determined to be outside the coverage range of the repeater but within coverage range of a direct transmission from the first MS. Hence, although the third MS can receive a communication direct from the first MS, the third MS will not be included in the group-call, as it will not receive any re-transmitted signal from the repeater.

Another scenario might be that at least some members of the talk group may be able to receive both the calling MS and the repeater's re-transmitted signal, but a direct signal from the calling MS may be received at a much higher quality than the re-transmitted signal from the repeater.

According to the known procedures such MSs are forced to receive calls at the lower quality via the repeater.

GB-A-2,316,271 describes a communication system in which a choice of communication type is available, namely directly or via the switched infrastructure including a base station. EP-A-1,168,676 (published after the priority date of the present Application) also describes a system of the kind described in GB-A-2,316,271 wherein the decision on communication type is based on availability of the base station. JP-A-07 023464 describes another system of the kind described in GB-A-2,316,271 and EP-A-1,168,676. The systems of these references depend on availability of a base station of a system infrastructure to set up communication between mobile stations. These references do not contemplate communication in a DMO via a repeater.

In summary, known DMO communication, via a repeater, imposes potentially unnecessary limitations on the quality of a communication link in certain operational scenarios. The stipulation of a DMO communication to operate via a repeater, at all times, will often lead to sub-optimal call quality.

Thus there currently exists a need to provide an improved communication system, a communication unit and method of setting up a call wherein the aforementioned disadvantages may at least be alleviated.

### Summary of Invention

In accordance with the present invention in a first aspect there is provided a radio communication unit capable of communicating with a second communication unit either directly or via an intermediary communication unit, the first mentioned radio communication unit including:
a receiver for receiving a call set-up request from at least the second communication unit wherein the call set-up request includes an indication that the call is to be set-up via an intermediary communication unit which is a radio communication repeater receiving directly the call set-up request from the second communication unit, and:
   a signal processor operably coupled to the receiver for determining a signal quality of the received call set-up request; and characterised in that:
      the receiver of the first mentioned radio communication unit is operable to receive the call set-up request from the second communication unit (i) on a first TETRA DMO Direct Mode Operation link direct from the second communication unit and (ii) on a second TETRA DMO link by re-transmission from the radio communication repeater, which is a DMO wireless repeater; and the processor is operable to determine from signals received via the two TETRA DMO links which of the two TETRA DMO links provides a better signal quality; and in response to such a determination the first communication unit is operable to participate in the call with the second communication unit via the link determined to provide the better signal quality.

According to the present invention in a second aspect there is provided a communication system comprising a plurality of communication units that are operable to communicate either directly or via an intermediary communicating unit, wherein at least a first one of the communication units is a unit in accordance with the first aspect of the invention.

According to the present invention in a third aspect there is provided a method of radio communication between a first radio communication unit and a second communication unit, the first mentioned radio communication unit including:
a receiver receiving a call set-up request from the second communication unit, wherein the call set-up request includes an indication that the call is to be set-up via an intermediary communication unit which is a radio communication repeater receiving directly the call set-up request from the second communication unit, and:
a signal processor operably coupled to the receiver determining a signal quality of the received call set-up request; and characterised by:
   the receiver of the first mentioned radio communications unit receiving the call set-up request from the second communication unit (i) on a first TETRA DMO Direct Mode Operation link direct from the second communication unit and (ii) on a second TETRA DMO link by re-transmission from the radio communication repeater, which is a DMO wireless repeater; and the processor determining from signals received via the two TETRA DMO links which of the two TETRA DMO links has a better signal quality; and in response to such a determination the first communication unit participating in the call with the second communication unit via the link determined to provide the better signal quality.

The radio communication repeater as in the prior art can for its "uplink" and "downlink" channels (i.e. channels for inward and outward signals) use either single frequency or a pair of frequencies.

In use of the invention, where two frequency channels are employed, the called MS(s) is (are) desirably operable to monitor both frequencies for sufficient time and regularity so that a call setup transmission of both a calling master MS and the repeater are detectable, especially if only one of these units is within range. If the call setup transmission from the calling MS can be received and decoded properly, the receiving MS needs to be able to tune its receiver frequency to each of the two channels in order to perform the comparative link measurements.

In the prior art, the receiving MS ignores a signal received directly from the calling MS because only the signal sent to the repeater contains an address identifier. In use of the invention, desirably the signal sent by the calling MS, e.g. especially the call set-up signal, includes an address identifier of both the repeater and the target receiving MS(s) so that the receiving MS(s), when within range, may identify, decode and carry out measurements on the signal received directly from the calling MS as well as that from the repeater.

Further features of the communication unit, system and method according to the invention are as defined in the accompanying dependent claims.

Beneficially, the communication system, unit and method according to the invention provide at least the following advantages:
(i) A receiving communication unit (MS) is able to decide on a preferred mechanism to join a call between two or more parties, via a repeater or by receiving signals directly from a communication unit of a calling party, based on measurements of the respective link qualities.
(ii) A receiving MS is able to join a communication in circumstances where the repeater would not in the prior art facilitate a communication to the calling MS, for example where the receiving MS or calling MS is outside the repeater coverage range, or in the case where a repeater re-transmission will have a poorer quality than a direct MS communication.
(iii) The delay (call set-up and voice delay) introduced when setting up a direct communication link if selected to be a preferred link is less than the overall delay when operating through the repeater.

Thus a communication system, a communication unit and communication unit are provided by the invention whereby the disadvantages described earlier with reference to prior art arrangements are substantially alleviated and improved communication is facilitated.

Exemplary embodiments of the present invention will now be described, with reference to the accompanying drawings, in which:

### Brief Description of the Drawings

FIG. 1 is a schematic block diagram of a direct mode radio communication system adapted to support the various inventive concepts of a preferred embodiment of the present invention;
FIG. 2 is a timing diagram illustrating a known timing process that can be implemented in the direct mode communication system of FIG. 1 to facilitate the inventive concepts of a preferred embodiment of the invention;
FIG. 3 is a simplified block circuit diagram of a subscriber unit adapted to support the inventive concepts of the preferred embodiments of the present invention; and
FIG. 4 is a flowchart of the decision making process for performing a call set-up in accordance with a preferred embodiment of the invention.

### Description of embodiments of the invention

In accordance with an embodiment of the invention, MSs operating in DMO use both up-link and down-link (via a Repeater) aspects of a direct mode call set-up transmission, in order to assess whether they wish to join a call directly or via the Repeater.

In particular, the inventors of the present invention have recognised the opportunity, and associated benefits thereby provided, to monitor up-link as well as down-link transmissions in a call set-up procedure in a DMO communication system.

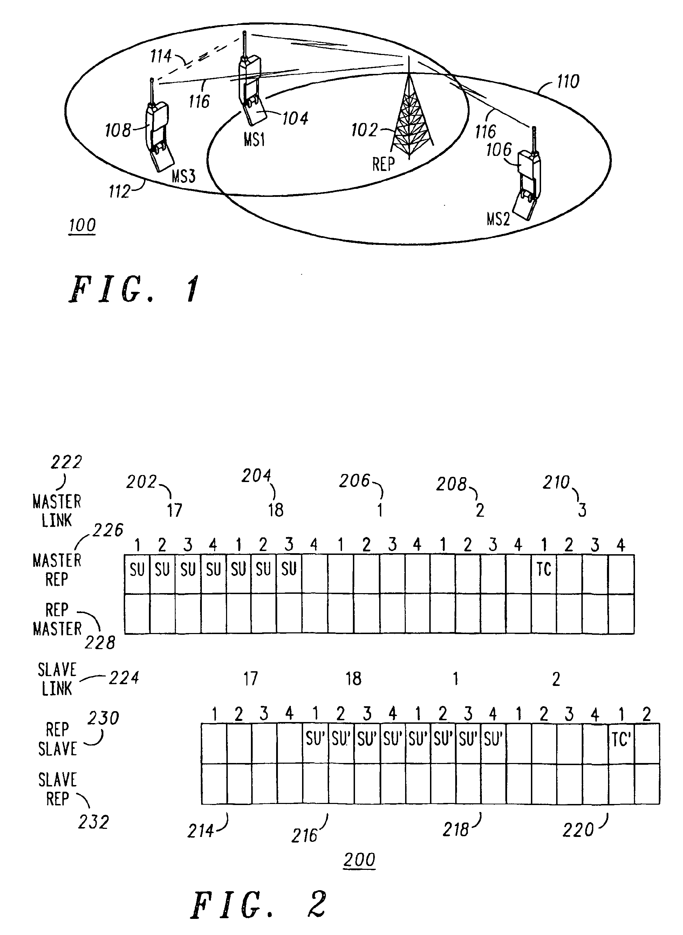

Turning first to FIG. 1, a typical DMO communication scenario is shown. The DMO communication system 100 includes a Repeater 102 facilitating communications between a plurality of MSs (104, 106, 108). Repeater 102 effectively provides a communication coverage range as shown by area 110. In practice, many MSs will be able to communicate at any instant in time, with three MSs shown in FIG. 1 for clarity purposes only.

In operation, MS-1 wishes to set up a group-call with MS-2 106 and MS-3 108. As can be seen, MS-2 106 is within the communication coverage range of Repeater 102, whilst MS-3 108 is not. However, MS-3 108 is within direct communication coverage range of MS-1 104.

In an embodiment of the invention, for example with regard to the TETRA standard, MS-1 104 transmits a group-call set-up request 112 to Repeater 102 on an "up-link (master-link) timeslot". MS-3 108 receives this group-call request by a direct communication link 114.

The Repeater 102 re-transmits the group-call set-up request to another MS, or group of MSs, on a "down-link (slave-link) timeslot" 116, for example to MS-2 106 and MS-3 108. As MS-3 108 is out of communication range of Repeater 102, MS-3 108 fails to receive the re-transmission of the group-call set-up request 116.

At the same time, MS-2 106 is out of direct communication range with MS-1 104, and only receives the re-transmission of the group-call set-up request 116, from the Repeater 102. The Repeater 102 specified within the TETRA standard is regenerative, i.e. it decodes and re-encodes received speech and signaling bursts which it receives (one slot's worth each time), to improve the overall link performance.

In accordance with an embodiment of the invention, MS-3 108 has been adapted to decode call set-up messages received directly from MS-1 104, in addition to any call set-up message re-transmitted from Repeater 102. Both MS-2 106 and MS-3 108 will recognise that the call is to be established via Repeater 102 due to the inclusion of a Repeater address in the call set-up request transmitted by MS-1 104.

MS-2 106 and MS-3 108 will independently perform link measurements of the direct communication link 114 with MS-1 104 (if it exists) using the group-call set-up transmission request from MS-1 104 on the master-link 112. Preferably, such link quality measurements may include any of the following: received signal strength indication (RSSI), bit-error-rate (BER), message-error-rate (MER), carrier to interference (C/I), or any other known quality indicia.

In addition, whilst the Repeater 102 re-transmits the group-call set-up message 116, as initially transmitted by MS-1 104, to both MS-2 106 and MS-3 108, MS-2 106 and MS-3 108 will perform the same link measurement on the Repeater's re-transmission call request signal 116 (if the signal can be successfully received).

Based on the link measurements of both the direct group-call set-up request transmission of master MS-1 104 and the Repeater's 102 re-transmitted group-call set-up request signal, MS-2 106 and MS-3 108 will independently decide whether to join the group call by receiving traffic communication direct from MS-1 104, or via the Repeater 102.

If a call set-up request transmission from either the master MS-1 104 or the Repeater 102 cannot be successfully received, the decision becomes trivial, as in the present case. In such a situation, MS-2 106 will join the group-call via the Repeater 102 and MS-3 108 will be able to join the group-call, by receiving and processing direct communication from MS-1 104.

However, if both the master-link 114 and the slave-link 116 can be successfully received and assessed, the decision is not trivial. In this case, MS-2 106 and/or MS-3 108 would make a determination on whether to join the group-call directly with MS-1 104 or via the Repeater 102.

Generally, the decision would be to join the call via Repeater 102, so that any replies to MS-1 104 can also be heard and received by other MS. When the slave MS, for example MS-2 106, replies to the calling MS, the slave MS will always respond through the Repeater 102.

If the call request by MS-1 104 is for a broadcast communication, MS-2 106 and/or MS-3 108 would not need to make, or hear, any replies to the broadcast transmission from MS-1 104. In this case, the selection of the communication link could be based purely on the individual link's signal quality measurement.

It is within the contemplation of the invention that the inventive concepts described herein are equally applicable to group (point-to-multipoint) call set-up requests or individual (point-to-point) call set-up requests.

A known method of setting up a call in a DMO channel is illustrated in FIG. 2. In FIG. 2, a MS (say, MS-1 104 of FIG. 1) initiates a call and establishes the channel synchronization by transmitting a sequence of call set-up messages to a Repeater (say, Repeater 102 of FIG. 1). On setting up a call the MS automatically assumes the role as "master", with the communication link to the Repeater being the master-link.

The call set-up arrangement is described with reference to the TETRA timing structure, which uses a TDMA access protocol 200. The timing structure is arranged in super-frames, with each super-frame comprising eighteen (rolling) time-frames. Time-frames seventeen to three 202-210 are shown with each divided into four time-slots 214-220, shown in relation to different time-frames for clarity purposes only.

The two-way communication link is divided into two parts:
(i) an up-link (master-link) 222 where the MS transmits in "master-Rep" time-slots 226 to the Repeater and receives messages in "Rep-master" time-slots 228 from the Repeater; and
(ii) a down-link (slave-link) 224 where the Repeater relays transmitted information from the transmitting MS in "Rep-slave" time-slots 230, to at least one other MS and is able to receive responses from the at least one other MS in "slave-Rep" time-slots 232.

In the example shown in FIG. 2, seven synchronization bursts ("su") are sent in master-Rep time-slots 226 in time-frame seventeen 202 and time-frame eighteen 204 of the master link 222. The synchronization bursts are received by the Repeater and re-transmitted ("su"') in Rep-slave time-slots 230 by the repeater on the slave-link. Note that due to propagation delays, the re-transmitted synchronization bursts "su' " are delayed by one time-frame compared to the initially transmitted synchronization bursts "su".

In this example, synchronisation bursts are transmitted in two frames giving up to a total of eight bursts, although the receiver needs only to receive just one of these bursts.

The master MS may then transmit traffic ("tc") information in the next available time-frame, which in this example is the first time-slot of the third time-frame 210 of the master link.

It is proposed that a receiving MS(s) will decode the "su" call setup messages received directly from MS-1, namely at least one of the seven synchronisation bursts in the "master-Rep" 226 series of time-slots. Receiving MS(s) will recognise that the call is to be established via Repeater due to the inclusion of the Repeater address in the call setup message.

Receiving MS(s) will independently perform link measurements between itself and the calling (master) MS using the "su" call setup transmission of the (master) MS.

Receiving MS(s) will tune to the "Rep-slave" 230 series of time slots on the slave-link channel 224 and also receive at least one "su"' call set-up request re-transmitted from the Repeater.

Based on the link measurements of both the master MS's direct "su" call set-up request and the Repeater's re-transmitted "su" call set-up request, the receiving MS(s) decides whether to join the call by receiving traffic communication direct from the master MS, or via the Repeater.

The Repeater can use either single frequency for "uplink" and "downlink" channels or a pair of frequencies. If a pair of frequencies are used, all receiving MS(s) will monitor both frequencies at a sufficient rate such that they can correctly decode both a call set-up request from a master MS and the Repeater's re-transmitted call set-up request. This is particularly advantageous if only one of the master MS or Repeater is within its communication range.

If the master MS call set-up transmission can be received and decoded properly, a receiving MS may have to tune their frequency synthesizer to receive the Repeater retransmission signals in order to perform both link measurements.

It is ithin the contemplation of the invention that any number of alternative timing configurations would benefit from the inventive concepts described herein.

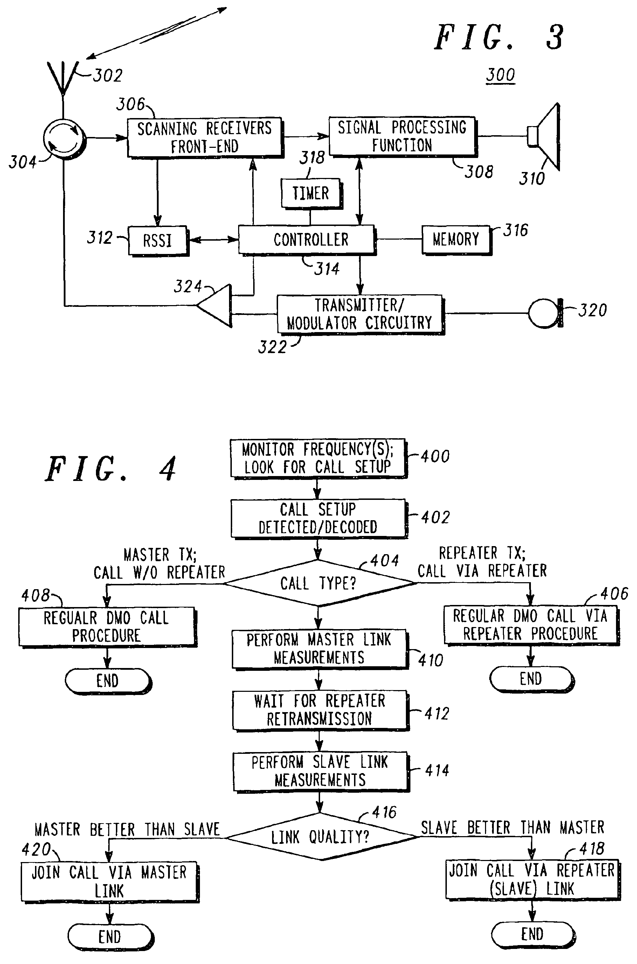

Turning now to FIG. 3, a block diagram of a MS 300, adapted to support the inventive concepts of the preferred embodiments of the present invention, is shown. The MS 300 contains an antenna 302 preferably coupled to a duplex filter or circulator 304 that provides isolation between receive and transmit chains within the MS 300.

The receiver chain includes scanning receiver front-end circuitry 306 (effectively providing reception, filtering and intermediate or base-band frequency conversion). The scanning front-end circuit 306 is serially coupled to a signal processing function 308.

In accordance with a preferred embodiment of the invention, the receiver chain has been adapted to receive both call set-up request transmissions on the master-link transmitted by the calling MS, as well as the re-transmitted call set-up request transmissions from the Repeater on the slave-link.

The scanning front-end receiver 306 has been adapted, in accordance with the present invention, to scan the appropriate frequencies and if necessary, say for paired frequency operation, switch between frequencies to decode signals transmitted on both a master-link and a slave-link.

The controller 314 may calculate receive bit-error-rate (BER) or frame-error-rate (FER) or similar link-quality measure data from recovered information via a received signal strength indication (RSSI) 312 function. The RSSI 312 function is operably coupled to the scanning front-end circuit 306. The memory device 316 stores a wide array of MS-specific data, such as decoding/encoding functions and the like, as well as link quality measurement information to enable an optimal communication link to be selected.

A timer 318 is operably coupled to the controller 314 to control the timing of operations, namely the transmission or reception of time-dependent signals, within the MS 300. In the context of the preferred embodiment of the present invention, timer 318 will be used to synchronize the receiving MS to the timing initiated by the calling MS.

Furthermore, once the timing format has been initiated, the timer 318 is used by the controller to select the appropriate master-link and slave-link channels and time-slots for tuning to.

As known in the art, an output from the signal processing function is typically provided to a suitable output device 310, such as a speaker or visual display unit (VDU) .

As regards the transmit chain, this essentially includes an input device 120, such as a microphone, coupled in series through transmitter/modulation circuitry 122 and a power amplifier 124. The transmitter/modulation circuitry 122 and the power amplifier 124 are operationally responsive to the controller, with an output from the power amplifier coupled to the duplex filter or circulator 104, as known in the art.

Of course, the various components within the MS 300 can be realised in discrete or integrated component form, with an ultimate structure therefore being merely an arbitrary selection.

In operation, upon power-on of MS 300, the MS 300 will search (scan) for all call set-up requests where it may be addressed. Once an appropriate call set-up request has been received, from a calling MS setting up the master-link, the MS 300 will perform a signal quality measurement. The MS 300 will then switch to the slave-link to perform a similar signal quality measurement on the Repeater's re-transmitted call set-up request.

The signal processor function 308 will then determine which communication link will best suit the particular MS, and inform the controller 314 of the fact. The controller 314 will then organize the operation of the MS 300 such that an acceptable communication link to the calling MS is established.

Turning now to FIG. 4, a flowchart of the decision making process for a call set-up is shown, in accordance with a preferred embodiment of the invention.

The method includes the steps of a MS monitoring any appropriate frequencies searching for a call set-up request, as shown in step 400. Once a call set-up request has been detected and decoded, as in step 402, the MS determines the type of call, as shown in step 404.

If the call-type is a master transmit call, without a repeater address, the MS determines that a regular DMO call procedure will be followed, as shown in step 408. If the call-type is a Repeater's re-transmission of a call set-up request on a slave-link, the MS determines that a regular DMO call via a Repeater procedure will be followed, as shown in step 406. In this case, it is likely that the receiving MS has not heard the calling MS's call set-up request, and is therefore only able to join the call via the Repeater.

If the call-type is not one of the above call-types, the MS performs at least one signal quality measurement on the master link, as in step 410. The MS then switches to the slave link, if appropriate, and waits for the Repeater's re-transmitted call set-up request transmission, as in step 412. The MS then performs at least one signal quality measurement on the Repeater's re-transmitted call set-up request transmission, as shown in step 414.

The two link quality measurements are then compared, as shown in step 416. If the master-link is determined to be of a better quality than the slave-link, the MS joins the DMO call by tuning into the master-link, as in step 420. If the slave-link is determined to be of a better quality than the master-link, the MS joins the DMO call by tuning into the slave-link, as in step 418.

It is within the contemplation of the invention that the re-transmission of the call set-up request from the repeater may encompass any transmission from the repeater that indicates a request has been made.

In this manner, the MS has selected its optimal method of communicating in the call, without being constrained to purely receiving a Repeater's relayed transmissions.

It is within the contemplation of the invention that a receiving MS may not need to perform a signal quality measurement on the master-link, if it knows that it is out of range of the Repeater station. In such a situation, the only option to join a subsequent call is via a direct communication with the calling MS and, as such, no signal quality measurement needs to be performed.

## Claims

1. A radio communication unit (108) capable of communicating with a second communication unit (104) either directly or via an intermediary communication unit, the first mentioned radio communication unit including:
a receiver (306-314) for receiving a call set-up request from at least the second communication unit, wherein the call set-up request includes an indication that the call is to be set-up via an intermediary communication unit which is a radio communication repeater (102) receiving directly the call set-up request from the second communication unit, and:
a signal processor (308) operably coupled to the receiver for determining a signal quality of the received call set-up request; and **characterised in that**:
the receiver of the first mentioned radio communications unit is operable to receive the call set-up request from the second communication unit (i) on a first TETRA DMO Direct Mode Operation link direct from the second communication unit and (ii) on a second TETRA DMO link by re-transmission from the radio communication repeater, which is a DMO wireless repeater; and the processor is operable to determine from signals received via the two TETRA DMO links which of the two TETRA DMO links provides a better signal quality; and in response to such a determination the first communication unit is operable to participate in the call with the second communication unit via the link determined to provide the better signal quality.

2. A communication unit according to claim 1, wherein the signal processor is operable to measure any one or more of the following to determine signal quality: received signal strength indication, bit-error-rate, message-error-rate, carrier to interference and other known signal quality indicia.

3. A communication unit according to claim 1 or claim 2 and wherein the first mentioned communication unit is also capable of operating alternatively in a trunked mode TETRA radio communication system.

4. A communication unit according to any one of claims 1 to 3 and which as a receiving communication unit is operable to receive signals from a calling communication unit directly in a first frequency channel and to receive signals from the calling unit and sent via a DMO repeater in a second frequency channel.

5. A communication unit according to any one of claims 1 to 4 and which is also operable as a calling unit.

6. A communication unit according to claim 7 and which as a calling unit is operable to send a signal which includes an address identifier of a target DMO repeater and a signal which includes an address identifier of one or more target receiving communication units.

7. A communication unit according to claim 6 and wherein the said address identifiers are contained within a common signal.

8. A communication system comprising an intermediary communication unit which is a radio communication repeater and a plurality of communication units that communicate either directly or via the intermediary communicating unit, wherein at least a first one of the communication units is a unit according to any one of the preceding claims.

9. A method of radio communication between a first radio communication unit (108) and a second communication unit (104), the first mentioned radio communication unit including:
a receiver (306-314) receiving a call set-up request from the second communication unit, wherein the call set-up request includes an indication that the call is to be set-up via an intermediary communication unit which is a radio communication repeater (102) receiving directly the call set-up request from the second communication unit, and:
a signal processor (308) operably coupled to the receiver determining a signal quality of the received call set-up request; and **characterised by**:
the receiver of the first mentioned radio communications unit receiving the call set-up request from the second communication unit (i) on a first TETRA DMO Direct Mode Operation link direct from the second communication unit and (ii) on a second TETRA DMO link by re-transmission from the radio communication repeater, which is a DMO wireless repeater; and the processor determining from signals received via the two TETRA DMO links which of the two TETRA DMO links has a better signal quality; and in response to such a determination the first communication unit participating in the call with the second communication unit via the link determined to provide the better signal quality.

10. A method according to claim 11 and wherein the or each receiving communication unit receives signals from a calling communication unit directly in a first frequency channel and sent via a DMO repeater in a second frequency channel.

11. A method according to claim 9 or claim 10 and wherein the calling unit sends a signal which includes an address identifier of at least one target DMO repeater and a signal which includes an address identifier of at least one target receiving communication unit.

12. A method according to claim 11 and wherein the said address identifiers are contained within a common signal.

## Patentansprüche

1. Funkkommunikationseinheit (108), die imstande ist, mit einer zweiten Kommunikationseinheit (104) entweder direkt oder über eine dazwischengeschaltete Kommunikationseinheit zu kommunizieren, wobei die zuerst genannte Funkkommunikationseinheit umfasst:
einen Empfänger (306 - 314) zum Empfangen einer Verbindungsaufbauanforderung von mindestens der zweiten Kommunikationseinheit, wobei die Verbindungsaufbauanforderung einen Hinweis umfasst, dass die Verbindung über eine dazwischengeschalteten Kommunikationseinheit aufzubauen ist, die ein Funkkommunikationsverstärker (102) ist, der die Verbindungsaufbauanforderung direkt von der zweiten Kommunikationseinheit empfängt, und:
einen in Wirkbeziehung an den Empfänger gekoppelten Signalprozessor (308) zur Bestimmung einer Signalqualität der empfangenen Verbindungsaufbauanforderung; und **dadurch gekennzeichnet, dass**
der Empfänger der zuerst genannten Funkkommunikationseinheit betreibbar ist, um die Verbindungsaufbauanforderung von der zweiten Kommunikationseinheit (i) auf einer ersten TETRA DMO-Direktbetriebsartverbindung direkt von der zweiten Kommunikationseinheit und (ii) auf einer zweiten TETRA DMO-Verbindung durch Neuübertragung von dem Funkkommunikationsverstärker, der ein drahtloser DMO-Verstärker ist, zu empfangen; und der Prozessor betreibbar ist, um aus den über die zwei TETRA DMO-Verbindungen empfangenen Signalen zu bestimmen, welche der zwei TETRA DMO-Verbindungen eine bessere Signalqualität zur Verfügung stellt; und die erste Kommunikationseinheit in Reaktion auf eine solche Bestimmung betreibbar ist, um sich an dem Anruf mit der zweiten Kommunikationseinheit über die Verbindung zu beteiligen, die bestimmt wurde, um die bessere Signalqualität zur Verfügung zu stellen.

2. Kommunikationseinheit gemäß Anspruch 1, wobei der Signalprozessor betreibbar ist, um einen beliebigen oder weitere der folgenden Parameter zu messen, um Signalqualität zu bestimmen: Anzeige der Stärke des empfangenen Signals, Bitfehlerrate, Nachrichtenfehlerrate, Träger-Störungs-Verhältnis und andere bekannte Signalqualitätsmerkmale.

3. Kommunikationseinheit gemäß Anspruch 1 oder Anspruch 2, wobei die zuerst genannte Kommunikationseinheit außerdem imstande ist, wahlweise in einem TETRA-Bündelfunkkommunikationssystem zu arbeiten.

4. Kommunikationseinheit gemäß einem der Ansprüche 1 bis 3, die als eine empfangende Kommunikationseinheit betreibbar ist, um Signale von einer rufenden Kommunikationseinheit direkt in einem ersten Frequenzkanal zu empfangen und Signale von der rufenden Einheit zu empfangen, die über einen DMO-Verstärker in einem zweiten Frequenzkanal gesendet wurden.

5. Kommunikationseinheit gemäß einem der Ansprüche 1 bis 4, die außerdem als eine rufende Einheit betreibbar ist.

6. Kommunikationseinheit gemäß Anspruch 7, die als eine rufende Einheit betreibbar ist, um ein Signal zu senden, das einen Adressenidentifizierer eines Ziel-DMO-Verstärkers umfasst, und ein Signal zu senden, das einen Adressenidentifizierer einer oder mehrerer empfangender Zielkommunikationseinheiten umfasst.

7. Kommunikationseinheit gemäß Anspruch 6, wobei die Adressenidentifizierer in einem gemeinsamen Signal enthalten sind.

8. Kommunikationssystem, das eine dazwischengeschaltete Kommunikationseinheit umfasst, die ein Funkkommunikationsverstärker ist, und eine Mehrzahl von Kommunikationseinheiten umfasst, die entweder direkt oder über die dazwischengeschaltete Kommunikationseinheit kommunizieren, wobei mindestens eine erste der Kommunikationseinheiten eine Einheit gemäß einem der vorangehenden Ansprüche ist.

9. Verfahren zur Funkkommunikation zwischen einer ersten Funkkommunikationseinheit (108) und einer zweiten Kommunikationseinheit (104), wobei die zuerst genannte Funkkommunikationseinheit umfasst:
einen Empfänger (306 - 314), der eine Verbindungsaufbauanforderung von der zweiten Kommunikationseinheit empfängt, wobei die Verbindungsaufbauanforderung einen Hinweis umfasst, dass die Verbindung über eine dazwischengeschaltete Kommunikationseinheit aufzubauen ist, die ein Funkkommunikationsverstärker (102) ist, der die Verbindungsaufbauanforderung direkt von der zweiten Kommunikationseinheit empfängt, und:
einen in Wirkbeziehung an den Empfänger gekoppelten Signalprozessor (308), der eine Signalqualität der empfangenen Verbindungsaufbauanforderung bestimmt; und **dadurch gekennzeichnet, dass**:
der Empfänger der zuerst genannten Funkkommunikationseinheit die Verbindungsaufbauanforderung von der zweiten Kommunikationseinheit (i) auf einer ersten TETRA DMO-Direktbetriebsart-Verbindung direkt von der zweiten Kommunikationseinheit und (ii) auf einer zweiten TETRA DMO-Verbindung durch Neuübertragung von dem Funkkommunikationsverstärker, der ein drahtloser DMO-Verstärker ist, empfängt; und der Prozessor aus den über die zwei TETRA DMO-Verbindungen empfangenen Signalen bestimmt, welche der zwei TETRA DMO-Verbindungen eine bessere Signalqualität hat; und sich in Reaktion auf eine solche Bestimmung die erste Kommunikationseinheit an dem Anruf mit der zweiten Kommunikationseinheit über die Verbindung beteiligt, die bestimmt wurde, die bessere Signalqualität zur Verfügung zu stellen.

10. Verfahren gemäß Anspruch 11, wobei die, oder jede, empfangene Kommunikationseinheit Signale von der rufenden Kommunikationseinheit direkt auf einem ersten Frequenzkanal empfängt und Signale von der rufenden Kommunikationseinheit empfängt, die über einen DMO-Verstärker auf einem zweiten Frequenzkanal gesendet wurden.

11. Verfahren gemäß Anspruch 9 oder Anspruch 10, wobei die rufende Einheit ein Signal sendet, das einen Adressenidentifizierer mindestens eines Ziel-DMO-Verstärkers umfasst, und ein Signal sendet, das einen Adressenidentifizierer mindestens einer empfangenden Zielkommunikationseinheit umfasst.

12. Verfahren gemäß Anspruch 11, wobei die Adressenidentifizierer in einem gemeinsamen Signal enthalten sind.

## Revendications

1. Unité de communication radio (108) capable de communiquer avec une deuxième unité de communication (104) directement ou via une unité de communication intermédiaire, la première unité de communication radio citée comprenant :
un récepteur (306-314) destiné à recevoir une demande d'établissement de communication provenant au moins de la deuxième unité de communication, dans laquelle la demande d'établissement de communication comprend une indication selon laquelle la communication doit être établie via une unité de communication intermédiaire qui est un répéteur de communication radio (102) recevant directement la demande d'établissement de communication provenant de la deuxième unité de communication, et
un processeur de signal (308) couplé de manière fonctionnelle au récepteur pour déterminer une qualité de signal de la demande d'établissement de communication reçue ; et **caractérisée en ce que** :
le récepteur de la première unité de communication radio citée peut fonctionner pour recevoir la demande d'établissement de communication provenant de la deuxième unité de communication (i) sur une première liaison TETRA DMO à fonctionnement en mode direct provenant directement de la deuxième unité de communication et (ii) sur une deuxième liaison TETRA DMO par une re-transmission provenant du répéteur de communication radio, qui est un répéteur DMO sans fil ; et le processeur peut fonctionner pour déterminer à partir des signaux reçus via les deux liaisons TETRA DMO laquelle des deux liaisons TETRA DMO offre la meilleure qualité de signal ; et en réponse à une telle détermination, la première unité de communication peut fonctionner pour participer à la communication avec la deuxième unité de communication via la liaison déterminée pour offrir la meilleure qualité de signal.

2. Unité de communication selon la revendication 1, dans laquelle le processeur de signal peut fonctionner pour mesurer un ou plusieurs des éléments suivants pour déterminer la qualité de signal : l'indication d'intensité de signal reçu, le taux d'erreur de bit, le taux d'erreur de message, le rapport signal sur brouilleur et d'autres indices de qualité de signal connus.

3. Unité de communication selon la revendication 1 ou la revendication 2, et dans laquelle la première unité de communication citée est également capable de fonctionner en alternance dans un système de communication radio TETRA à mode tronqué.

4. Unité de communication selon l'une quelconque des revendications 1 à 3, et qui, en tant qu'unité de communication de réception, peut fonctionner pour recevoir des signaux provenant d'une unité de communication appelante directement dans un premier canal de fréquence et pour recevoir des signaux provenant de l'unité appelante et envoyés via un répéteur DMO dans un deuxième canal de fréquence.

5. Unité de communication selon l'une quelconque des revendications 1 à 4, et qui peut également fonctionner en tant qu'unité appelante.

6. Unité de communication selon la revendication 7, et qui, en tant qu'unité appelante, peut fonctionner pour envoyer un signal qui comprend un identificateur d'adresse d'un répéteur DMO cible et un signal qui comprend un identificateur d'adresse d'une ou plusieurs unités de communication de réception cibles.

7. Unité de communication selon la revendication 6, et dans laquelle lesdits identificateurs d'adresse sont contenus dans un signal commun.

8. Système de communication comprenant une unité de communication intermédiaire qui est un répéteur de communication radio et une pluralité d'unités de communication qui communiquent directement ou via l'unité de communication intermédiaire, dans lequel au moins une première des unités de communication est une unité selon l'une quelconque des revendications précédentes.

9. Procédé de communication radio entre une première unité de communication radio (108) et une deuxième unité de communication radio (104), la première unité de communication radio citée comprenant :
un récepteur (306-314) recevant une demande d'établissement de communication provenant de la deuxième unité de communication, dans laquelle la demande d'établissement de communication comprend une indication selon laquelle la communication doit être établie via une unité de communication intermédiaire qui est un répéteur de communication radio (102) recevant directement la demande d'établissement de communication provenant de la deuxième unité de communication, et
un processeur de signal (308) couplé de manière fonctionnelle au récepteur déterminant une qualité de signal de la demande d'établissement de communication reçue ; et **caractérisé en ce que** :
le récepteur de la première unité de communication radio citée recevant la demande d'établissement de communication provenant de la deuxième unité de communication (i) sur une première liaison TETRA DMO à fonctionnement en mode direct provenant directement de la deuxième unité de communication et (ii) sur une deuxième liaison TETRA DMO par une re-transmission provenant du répéteur de communication radio, qui est un répéteur DMO sans fil ; et le processeur déterminant à partir des signaux reçus via les deux liaisons TETRA DMO laquelle des deux liaisons TETRA DMO offre la meilleure qualité de signal ; et en réponse à une telle détermination, la première unité de communication participant à la communication avec la deuxième unité de communication via la liaison déterminée pour offrir la meilleure qualité de signal.

10. Procédé selon la revendication 11, et dans lequel la ou chaque unité de communication de réception reçoit des signaux provenant d'une unité de communication appelante directement dans un premier canal de fréquence et envoyés via un répéteur DMO dans un deuxième canal de fréquence.

11. Procédé selon la revendication 9 ou la revendication 10, et dans lequel l'unité appelante envoie un signal qui comprend un identificateur d'adresse d'au moins un répéteur DMO cible et un signal qui comprend un identificateur d'adresse d'au moins une unité de communication de réception cible.

12. Procédé selon la revendication 11, et dans lequel lesdits identificateurs d'adresse sont contenus dans un signal commun.
